(19) Europäisches Patentamt
European Patent Office
Office européen des brevets

(11) Publication number: **0 128 264**
**A2**

# (12) EUROPEAN PATENT APPLICATION

(21) Application number: **84101494.7**

(22) Date of filing: **14.02.84**

(51) Int. Cl.[3]: **C 09 K 11/08**

(30) Priority: **14.02.83 JP 23549/83**
**14.02.83 JP 23550/83**
**14.02.83 JP 23551/83**

(43) Date of publication of application: **19.12.84**
**Bulletin 84/51**

(84) Designated Contracting States: **DE FR NL**

(71) Applicant: **FUJI PHOTO FILM CO., LTD., 210 Nakanuma Minami Ashigara-shi, Kanagawa 250-01 (JP)**

(72) Inventor: **Kuriyama, Takayuki c/o Fuji Photo, Film Co., Ltd. No 798, Miyanodai Kaisei-machi, Ashigara-kami-gun Kanagawa (JP)**
Inventor: **Umemoto, Chiyuki c/o Fuji Photo, Film Co., Ltd. No 798, Miyanodai Kaisei-machi, Ashigara-kami-gun Kanagawa (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## (54) Process for the preparation of phosphor.

(57) A novel process for the preparation of a phosphor, which comprises steps of melting a mixture of starting materials for the phosphor and quenching the molten product in contact with an aqueous medium or with a solid surface for quenching, or by spraying said molten product into a gas, to obtain crystalline phosphor particles.

EP 0 128 264 A2

# PROCESS FOR THE PREPARATION OF PHOSPHOR

## BACKGROUND OF THE INVENTION

### FIELD OF THE INVENTION

The present invention relates to a novel process for the preparation of a phosphor.

### DESCRIPTION OF THE PRIOR ART

A phosphor has been conventionally prepared by a process comprising steps of sufficiently mixing starting materials for the phosphor in a dry state or in the form of a slurry (i.e., a dry method or a wet method), to prepare a homogeneous mixture of the starting materials for the phosphor and then firing the mixture at a temperature lower than the melting point thereof.

In the above-described conventional method, the firing step is carried out to diffuse an activator element into a host crystal as well as to produce the host crystal and is an important step giving much effect to various properties of the resulting phosphor, for instance luminance of light emission. The firing step is generally conducted at a temperature in the vicinity of the melting point of the host crystal so as to effectively produce the host crystal and incorporate the activator element into the host crystal. In such firing step, however, sintering of phosphor is liable to take place and therefore, it is generally required to subject the phosphor obtained by firing to pulverization followed by classification. This means that the procedure for the preparation of a phosphor is necessarily complicated and that the yield of the resulting phosphor decreases. Additionally, the sintering phenomenon in the firing step

generally gives only adverse effect to the emission properties of the phosphor, especially to the luminance of emission thereof.

In summary, there are problems in the conventional process for the preparation of a phosphor, such as the complicated procedure for the preparation and the unsatisfactory yield of the resulting phosphor, and these problems are great obstacles to the reduction of cost for the preparation of the phosphor.

## SUMMARY OF THE INVENTION

It is, accordingly, an object of the present invention to provide a novel process for the preparation of a phosphor which is enable to simplify the procedures for the preparation thereof and to omit the pulverization procedure. Said novel process for the preparation of a phosphor comprises steps of melting a mixture of starting materials for the phosphor and then quenching the molten product in contact with an aqueous medium or with a solid surface for quenching, or by spraying the molten product into a gas, to obtain crystalline phosphor particles.

More in detail, the present invention provides a process for the preparation of a phosphor comprising steps of melting starting materials for the phosphor under heating at a temperature not less than the melting point thereof, quenching the molten product in contact with an aqueous medium to obtain crystalline phosphor particles.

The present invention also provides a process for the preparation of a phosphor comprising steps of melting starting materials for the phosphor in the same manner as mentioned above and quenching the molten product in contact with a solid surface for quenching to obtain crystalline phosphor particles.

The present invention further provides a process for

the preparation of a phosphor comprising steps of melting starting materials for the phosphor in the same manner as stated above and quenching the molten product by spraying it into a gas to obtain crystalline phosphor particles.

## DETAILED DESCRIPTION OF THE INVENTION

According to the process of the present invention, several procedures can be omitted from the aformentioned conventional process for the preparation of a phosphor, for instance, the procedure of preparing a homogeneous mixture of starting materials for the phosphor by a dry or wet method prior to the firing stage, the procedure of pulverizing the sintered phosphor produced by the firing stage and the subsequent procedure of classifying the phosphor. In addition, the decrease of yield of the resulting phophor, which is liable to occur in the conventional process, can be prevented. Accordingly, the cost for the preparation of phosphor can be remarkably reduced.

Moreover, the present invention provides crystalline phosphor particles excellent in powder flowability. Especially in the case of quenching the molten product in contact with an aqueous medium, it is possible to obtain a finely particulate phosphor having a particle diameter within a range of from 1 μm to several ten μm.

In the art of the preparation of glass, there has been known a method of quenching the molten product of starting materials for glass in contact with an aqueous medium or with a solid surface for queching to obtain glass in the form of particles. However, the glass particles obtained by this known method are noncrystalline particles, which are entirely different from crystalline particles obtainable according to the process of the present invention.

The novel process for the preparation of a phosphor

of the present invention can be applied to any phosphor, as far as the phosphor can be produced in the form of crystalline particles when the molten product of starting materials of the phosphor is quenched in contact with an aqueous medium or with a solid surface for quenching, or by spraying the molten product into a gas. The present invention is preferably applied to a phosphor containing a halogen as a host component. Examples of the phosphor containing a halogen as a host component include a fluorohalide phosphor such as a divalent europium activated divalent metal fluorohalide phosphor; an oxyhalide phosphor such as a rare earth element activated rare earth oxyhalide phosphor; a halophosphate phosphor; and a haloborate phosphor. The present invention is preferably applicable to the preparation of the fluorohalide phosphor and oxyhalide phosphor.

The divalent europium activated divalent metal fluorohalide phosphors belonging to the former fluorohalide phosphor such as $BaFBr:Eu^{2+}$, $BaFCl:Eu^{2+}$, $BaFI:Eu^{2+}$ and $(Ba,Sr)FBr:Eu^{2+}$; and the rare earth element activated rare earth oxyhalide phosphors belonging to the latter oxyhalide such as LaOBr:Ce, LaOBr:Tb, LaOBr:Tm, LaOCl:Ce, LaOCl:Tb and LaOCl:Tm, have a high absorption efficiency to a radiation such as X-rays and emit light (spontaneous emission) within the region of from near-ultraviolet to visible upon exposure to a radiation such as X-rays. Accordingly, they can be employed in a radiographic intensifying screen used in radiography for medical diagnosis and for nondestructive test.

Further, the above-described divalent europium activatd divalent metal fluorohalide phosphor and rare earth element activated rare earth oxyhalide phosphor are stimulable phosphors. That is, when exposed to a radiation such as X-rays, the phosphors absorb a portion of the radiation energy and emit near ultraviolet to visible light (stimulated emission) when excited with an electromagnetic wave within a wavelength region of 450 - 800 nm after exposure to the radiation. Recently, these phosphors have been paid much attention as phosphors employable in a radiation image recording and reproducing method utilizing stimulable phosphor. In other words, the divalent europium activated divalent metal fluorohalide phosphor and the rare earth element activated rare earth oxyhalide phosphor are employable in a radiation image storage panel (i.e., stimulable phosphor sheet) used in the radiation image recording and reproducing method utilizing stimulable phosphor.

The process for the preparation of a phosphor of the present invention is not applicable to a phosphor which is produced in the form of noncrystalline particles when the molten product of a mixture of starting materials for the phosphor is quenched in such a manner as desribed above, for instance, a complex oxide phosphor containing a large amount of glass former (e.g., $P_2O_5$, $B_2O_3$ or $SiO_2$), because such noncrystalline particles generally show an emission of extremely low luminance. However, even if a resulting phosphor contains a glass former as its component, the process of the present invention is applicable to the phosphor, provided that at least a part of the resulting phosphor is produced in the form of crystalline particles capable of showing an emission of high luminance when quenching the molten product in the above-described manner.

The process for the preparation of a phosphor of the present invention will be described hereinbelow, referring to the above-described divalent europium activated divalent metal fluorohalide phosphor.

As the starting materials, the following materials can be employed:

(1) $BaF_2$ (barium fluoride);

(2) at least one barium halide selected from the group consisting of $BaCl_2$, $BaBr_2$ and $BaI_2$;

(3) at least one divalent metal halide selected from the group consisting of $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $ZnF_2$, $ZnCl_2$, $ZnBr_2$, $ZnI_2$, $CdF_2$, $CdCl_2$, $CdBr_2$ and $CdI_2$; and

(4) a trivalent europium compound such as a europium halide, europium oxide, europium nitrate or europium sulfate.

An ammonium halide ($NH_4X'$, in which X' is F, Cl, Br or I) can be employed as a flux, if desired.

The above-mentioned starting materials are mixed in the stoichiometric ratio corresponding to the formula (I):

$$(Ba_{1-x},M^{2+}{}_x)FX:yEu \qquad (I)$$

in which $M^{2+}$ is at least one divalent metal selected from the group consisting of Mg, Ca, Sr, Zn and Cd; X is at least one halogen selected from the group consisting of Cl, Br and I; and <u>x</u> and <u>y</u> are numbers satisfying the conditions of $0 \leqq x \leqq 0.6$ and $0 < y \leqq 0.2$, respectively.

To the mixture may be added a small amount of other additives such as an alkali metal halide (e.g., sodium bromide) and a metal oxide (e.g., silicon dioxide) for improving the emission properties such as emission luminances (luminance of spontaneous emission and luninance of stimulated emission).

Subsequently, the mixture of starting materials for the phosphor is melted for mixing.

The melting procedure is conducted, for instance, by heating in an electric furnace the mixture of starting materials for the phosphor charged in a heat-resistant container such as a platinum crusible under stirring. Generally, the temperature suitable for melting is not less than the melting point of the starting materials and does not exceed the melting point by 200°C. That is, the temperature for the melting procedure is determined depending upon the kind of aimed phosphor, composition of the mixture of starting materials for the phosphor or the like, and the above-mentioned mixture of starting materials employed for the preparation of divalent europium activated divalent metal fluorohalide phosphor is preferably melted at a temperature within the range of 1100 - 1450$^{o}$C. The melting period is determined depending upon the amount of the mixture of starting materials for the phosphor, the melting temperature, etc., and generally ranges from 0.5 to 5 hours. As the atmosphere for melting the mixture, preferably employed is a weak reducing atmosphere such as a nitrogen gas atmosphere containing a small amount of hydrogen gas or a carbon dioxide gas atmosphere containing carbon monoxide gas. In the melting stage, the trivalent europium contained in the mixture is reduced into divalent europium by the reducing atmosphere.

After the melting procedure is complete, the molten product is substantially quenched by any of the following three methods:

1) quenching the molten product in contact with an aqueous medium, for instance, by dropping the molten product into the aqueous medium;

2) quenching the molten product in contact with a solid surface for quenching, for instance, by dropping the molten product onto the solid surface; and

3) quenching the molten product by spraying the molten product into a gas.

In the first method of quenching the molten product in contact with an aqueous medium, the employable aqueous medium is simple water, or water containing an appropriate acid, alkali, water-soluble salt or water- miscible organic solvent. The molten product dropped into the aqueous medium is immediately solidified whereby crystalline phosphor is dispersed therein in the form of fine particles. The crystalline phosphor particles are then

collected by filtration or the like, washed and dried to obtain a powdery phosphor. The so obtained powdery phosphor generally has a particle diameter in a range of from 1 µm to several ten µm.

As the second method of quenching the molten product in contact with a solid surface for quenching, known methods employable for rapidly quenching a certain molten product can be employed in the present invention. For instance, there can be employed a method of dropping liquid drops of the molten product onto a surface of a metallic rotator for quenching or a method of causing liquid drops of the molten product to come into collision with a surface of a metal plate for quenching. The dropping of the molten product is preferably done under gaseous pressure, etc.

Examples of the former method using a quenching rotator include a centrifugal method in which the molten product is dropped on the inner side of the rotator and a roller method in which the molten product is dropped onto a surface of a roller under rotation. In the roller method, there can be mentioned various methods such as a method of using a single roller and a method of dropping the molten product into a clearance provided between two rollers which are closely and adversely rotating each other. Example of the latter method using a quenching plate include a method of dropping the molten product onto an inclined plate for quenching, a method of causing the liquid drops of the molten product to come into mechanical collision with an inclined plate for quenching, and a method of receiving liquid drops of the molten product between two plates for quenching.

However, the quenching method employable in the present invention is by no means restricted to the above-described methods, and other appropriate methods can be employed as far as the molten product can be quenched and solidified in contact with a solid surface for quenching.

The molten product of the mixture of starting materials for the phosphor is quenched in the above-described manner, to obtain a powdery crystalline phosphor solidified on the solid surface.

The third method of spray-quenching can be done, for instance, by a procedure of spraying the molten product into an inert atmosphere such as nitrogen gas or argon gas through a nozzle together with such inert gas under pressure. In the spray-quenching method, the molten product is sprayed and quenched in the form of small sized drops in the gas to form a powdery solidified product (crystalline phosphor particles).

However, the spray-quenching method employable in the present invention is by no means restricted to the above-described method, and a variety of other known methods can be employed in the present invention. For instance, there can be utilized a method of spraying the molten product into a clearance provided between two rollers (made of a material such as graphite, alumina or metal) which are closely and adversely rotating each other, producing a cavity within the molten product and blowing up the molten product into particles. In this case, the quenching is preferably carried out under inert gas atmosphere as described above.

The crystalline phosphor particles obtained by the quenching in a gas in the above-mentioned manner is preferably collected using a quenching plate or the like.

Thus, the mixture of starting materials for the phosphor is melted and quenched to obtain a powdery crystalline phosphor.

The resulting phosphor can be further fired in order to enhance the emission property such as emission luminance. The firing is conducted by placing the obtained powdery phosphor in a heat-resistant container such as a quartz boat, an alunina crusible or a quartz crusible, and then firing it in an electric furnace. The temperature for the firing suitably ranges from 600 to 1000°C. The firing period is determined depending upon the amount of the phosphor, the firing temperature, etc., and generally ranges from 0.5 to 12 hours. As the firing atmosphere, there can be employed an inert atmosphere such as a nitrogen gas atmosphere or an argon gas atmosphere as well as the afore-mentioned weak reducing atmosphere.

The phosphor prepared in the above-described process comprising melting and quenching, and firing if desired is in the form of fine particles, having a high flowability as well as being extremely homogeneous. Accordingly, the fired product is not particularly required to be pulverized or further classified to select particles of a small mean diameter. These procedures are required in the conventional process. However, the phosphor prepared according to the present invention can be further processed in a conventional manner involving a variety of procedures for the preparation of a phosphor, for instance, a finely pulverizing procedure, a washing procedure, a drying procedure and a sieving procedure, if desired, and the present invention is by no means intended to exclude the use of those procedures.

The phosphor prepared by the process employing the above-exemplified starting materials is a divalent europium activated divalent metal fluorohalide phosphor substantially having the formula (II):

$$(Ba_{1-x},M^{2+}_{x})FX:yEu^{2+} \qquad (II)$$

in which $M^{2+}$ is at least one divalent metal selected from the group consisting of Mg, Ca, Sr, Zn and Cd; X is at least one halogen selected from the group consisting of Cl, Br and I; and <u>x</u> and <u>y</u> are numbers satisfying the conditions of $0 \leq x \leq 0.6$ and $0 < y \leq 0.2$, respectively.

The process for the preparation of a divalent europium activated divalent metal fluorohalide phosphor is

hereinbefore described as an example of the process for the preparation of a phosphor of the present invention, but the process of the present invention is by no means restricted to the process for the preparation of the above-described phosphor and can be employed for the preparation of various other phosphors. Even in the case of preparing other phosphors by employing the process of the present invention, a particulate crystalline phosphor having excellent powder flowability can be easily obtained.

According to the process for the preparation of a phosphor of the present invention, as mentioned hereinbefore, the preparation steps can be simplified and the cost for the preparation of a phosphor is extremely reduced, as compared with the aforedescribed conventional process.

Further, according to the present invention, the molten product (i.e., a product obtained by melting the mixture) can be efficiently quenched by the quenching in contact with an aqueous medium or with a solid surface for quenching, or by spraying it into a gas. Furthermore, the resulting crystalline phosphor is excellent in the powder flowability. Especially, in the case of quenching the molten product in contact with the aqueous medium, there is obtained phosphor particles having a diameter ranging from 1 μm to several ten μm.

The present invention is now illustrated by the following examples, but the examples by no means restrict the invention.

Example 1

175.34 g. of barium fluoride ($BaF_2$), 297.1 g. of barium bromide ($BaBr_2$) and 0.783 g. of europium bromide ($EuBr_3$) were mixed to prepare a mixture of starting materials for a phosphor. The mixture was then placed in a platinum crusible, which was in turn placed in a high-temperature electric furnace. The mixture was melted under stirring in the furnace at 1300°C for 1 hour under a carbon dioxide gas atmosphere containing carbon monoxide.

The molten product was then quenched by dropping the molten product in water to obtain a product dispersed therein. The dipersed product in the form of fine particles was collected by filtration followed by washing with methanol and drying at 150°C under vaccum.

In the analysis of a part of thus obtained particles by means of X-ray diffraction, a pattern of crystalline BaFBr was observed on the X-ray diffraction pattern measured. Further confirmed was that the particles showed spontaneous and stimulated emissions of high luminance. Accordingly, the obtained particles were identified as particles of crystalline $BaFBr:0.001Eu^{2+}$ phosphor.

The dried phosphor particles as obtained above were placed in an alumina crusible, which was in turn placed in a high-temperature electric furnace. The phosphor particles were then fired at 800°C for 1 hour under a nitrogen gas atmosphere. After the firing was complete, the fired product was taken out of the furnace and allowed to stand for cooling.

The phosphor obtained after the firing showed spontaneous and stimulated emissions of higher luminance than those of the phosphor having been subjected to no firing. Measurement of the phosphor on the particle diameter indicated that the phosphor had a particle size distribution in the range of 2 - 50 μm. Further, the powdery

phosphor had an extremely excellent flowability.

Example 2

175.34 g. of barium fluoride ($BaF_2$), 297.1 g. of barium bromide ($BaBr_2$) and 0.783 g. of europium bromide ($EuBr_3$) were mixed to prepare a mixture of starting materials for a phosphor. The mixture was then placed in a platinum crusible, which was in turn placed in a high-temperature electric furnace. The mixture was melted under stirring in the furnace at 1300°C for 1 hour under a carbon dioxide gas atmosphere containing carbon monoxide.

The molten product was then quenched by dropping the molten product into a clearance between two steel rollers (clearance : 50 μm) which are adversely rotating at a rotating speed of 2200 r.p.m., to obtain a powdery solidified product.

In the analysis of a part of thus obtained particles by means of X-ray diffraction, a pattern of crystalline BaFBr was observed in the X-ray diffraction pattern measured. Further confirmed was that the particles showed spontaneous and stimulated emissions of high luminance. Accordingly, the obtained particles were identified as particles of crystalline $BaFBr:0.001Eu^{2+}$ phosphor.

The dried phosphor particles as obtained above were placed in an alumina crusible, which was in turn placed in a high-temperature electric furnace. The phosphor particles were then fired at 800°C for 1 hour under a nitrogen gas atmosphere. After the firing was complete, the fired product was taken out of the furnace and allowed to stand for cooling.

The phosphor obtained after the firing showed spontaneous and stimulated emissions of higher luminance than those of the phosphor having been subjected to no firing. Further, the powdery phosphor had an extremely excellent flowability.

Example 3

175.34 g. of barium fluoride ($BaF_2$), 297.1 g. of barium bromide ($BaBr_2$) and 0.783 g. of europium bromide ($EuBr_3$) were mixed to prepare a mixture of starting materials for a phosphor. The mixture was then placed in a platinum crusible, which was in turn placed in a high-temperature electric furnace. The platinum crusible had an exit in the form of a nozzle jacketted with a coaxial outer nozzle through which a gas rapidly flows. The mixture was melted under stirring in the furnace at 1300$^{\circ}$C for 1 hour under a carbon dioxide gas atmosphere containing carbon monoxide.

The molten product was then spray-quenched by dropping the molten product through an inner nozzle (nozzle caliber: 0.4 µm) of the platinum crusible in the condition of nitrogen gas (gas pressure: 1.0 kg/cm$^2$) flowing through an outer nozzle (nozzle caliber: 1.6 µm) thereof in a flow rate of 10 l/min., to obtain a powdery solidified product.

In the analysis of a part of thus obtained particles by means of X-ray diffraction, a pattern of crystalline BaFBr was observed in the X-ray diffraction pattern measured. Further confirmed was that the particles showed spontaneous and stimulated emissions of high luminance. Accordingly, the obtained particles were identified as particles of crystalline BaFBr:0.001$Eu^{2+}$ phosphor.

The dried phosphor particles as obtained above were placed in an alumina crusible, which was in turn placed in a high-temperature electric furnace. The phosphor particles were then fired at 800$^{\circ}$C for 1 hour under a nitrogen gas atmosphere. After the firing was complete, the fired product was taken out of the furnace and allowed to stand for cooling.

The phosphor obtained after the firing showed spontaneous and stimulated emissions of higher luminance than those of the phosphor having been subjected to no firing. Measurement of the phosphor on the particle diameter indicated that the phosphor had a particle size distribution in the range of 2 - 50 μm. Further, the powdery phosphor had an extremely excellent flowability.

CLAIMS:

1. A process for the preparation of a phosphor, which comprises melting a mixture of starting materials for the phosphor and quenching the molten product in contact with an aqueous medium to obtain crystalline phosphor particles.

2. The process for the preparation of a phosphor as claimed in claim 1, in which said phosphor contains a halogen as a host component thereof.

3. The process for the preparation of a phosphor as claimed in claim 2, in which said phosphor is a fluorohalide phosphor.

4. The process for the preparation of a phosphor as claimed in claim 3, in which said fluorohalide phosphor is a divalent europium activated divalent metal fluorohalide phosphor.

5. The process for the preparation of a phosphor as claimed in claim 2, in which said phosphor is an oxyhalide phosphor.

6. The process for the preparation of a phosphor as claimed in claim 5, in which said oxyhalide phosphor is a rare earth element activated rare earth oxyhalide phosphor.

7. A process for the preparation of a phosphor, which comprises melting a mixture of starting materials for the phosphor, quenching the molten product in contact with an aqueous medium to obtain crystalline phosphor particles and then firing the crystalline phosphor particles.

8. The process for the preparation of a phosphor as claimed in claim 7, in which said phosphor contains a halogen as a host component thereof.

9. The process for the preparation of a phosphor as claimed in claim 8, in which said phosphor is a fluorohalide phosphor.

10. The process for the preparation of a phosphor as claimed in claim 9, in which said fluorohalide phosphor is a divalent europium activated divalent metal fluorohalide phosphor.

11. The process for the preparation of a phosphor as claimed in claim 8, in which said phosphor is an oxyhalide phosphor.

12. The process for the preparation of a phosphor as claimed in claim 11, in which said oxyhalide phosphor is a rare earth element activated rare earth oxyhalide phosphor.

13. A process for the preparation of a phosphor, which comprises melting a mixture of starting materials for the phosphor and quenching the molten product in contact with a solid surface for quenching to obtain crystalline phosphor particles.

14. The process for the preparation of a phosphor as claimed in claim 13, in which said quenching is carried out by introducing the molten product between two rotating rollers close to each other.

15. The process for the preparation of a phosphor as claimed in claim 13 of claim 14, in which said phosphor contains a halogen as a host component thereof.

16. The process for the preparation of a phosphor as claimed in claim 15, in which said phosphor is a fluorohalide phosphor.

17. The process for the preparation of a phosphor as claimed in claim 16, in which said fluorohalide phosphor is a divalent europium activated divalent metal fluorohalide phosphor.

18. The process for the preparation of a phosphor as claimed in claim 15, in which said phosphor is an oxyhalide phosphor.

19. The process for the preparation of a phosphor as claimed in claim 18, in which said oxyhalide phosphor is a rare earth element activated rare earth oxyhalide phosphor.

20. A process for the prparation of a phosphor, which comprises melting a mixture of starting materials for the phosphor, quenching the molten product in contact with a solid surface for quenching to obtain crystalline phosphor particles and then firing the crystalline phosphor particles.

21. The process for the preparation of a phosphor as claimed in claim 20, in which said quenching is carried out by introducing the molten product between two rotating rollers close to each other.

22. The process for the preparation of a phosphor as claimed in claim 20 or 21, in which said phosphor contains a halogen as a host component thereof.

23. The process for the preparation of a phosphor as claimed in claim 22, in which said phosphor is a fluorohalide phosphor.

24. The process for the preparation of a phosphor as claimed in claim 23, in which said fluorohalide phosphor is a divalent europium activated divalent metal fluorohalide phosphor.

25. The process for the preparation of a phosphor as claimed in claim 22, in which said phosphor is an oxyhalide phosphor.

26. The process for the preparation of a phosphor as claimed in claim 25, in which said oxyhalide phosphor is a rare earth element activated rare earth oxyhalide phosphor.

27. A process for the preparation of a phosphor, which comprises melting a mixture of starting materials for the phosphor and quenching the molten product by spraying it into a gas to obtain crystalline phosphor particles.

28. The process for the preparation of a phosphor as claimed in claim 27, in which said phosphor contains a halogen as a host component thereof.

29. The process for the preparation of a phosphor as claimed in claim 28, in which said phosphor is a fluorohalide phosphor.

30. The process for the preparation of a phosphor as claimed in claim 29, in which said fluorohalide phosphor is a divalent europium activated divalent metal fluorohalide phosphor.

31. The process for the preparation of a phosphor as claimed in claim 28, in which said phosphor is an oxyhalide phosphor.

32. The process for the preparation of a phosphor as claimed in claim 31, in which said oxyhalide phosphor is a rare earth element activated rare earth oxyhalide phosphor.

33. A process for the prparation of a phosphor, which comprises melting a mixture of starting materials for the phosphor, quenching the molten product by spraying thereof into a gas to obtain crystalline phosphor particles and then firing the crystalline phosphor particles.

34. The process for the preparation of a phosphor as claimed in claim 33, in which said phosphor contains a halogen as a host component thereof.

35. The process for the preparation of a phosphor as claimed in claim 34, in which said phosphor is a fluorohalide phosphor.

36. The process for the preparation of a phosphor as claimed in claim 35, in which said fluorohalide phosphor is a divalent europium activated divalent metal fluorohalide phosphor.

37. The process for the preparation of a phosphor as claimed in claim 34, in which said phosphor is an oxyhalide phosphor.

38. The process for the preparation of a phosphor as claimed in claim 37, in which said oxyhalide phosphor is a rare earth element activated rare earth oxyhalide phosphor.